(19) Europäisches Patentamt
European Patent Office
Office européen des brevets

(11) **EP 2 293 595 A1**

(12) **EUROPEAN PATENT APPLICATION**
published in accordance with Art. 153(4) EPC

(43) Date of publication:
**09.03.2011 Bulletin 2011/10**

(51) Int Cl.:
**H04R 3/02** *(2006.01)*    **H04B 3/23** *(2006.01)*

(21) Application number: **09758316.5**

(22) Date of filing: **02.06.2009**

(86) International application number:
**PCT/JP2009/060055**

(87) International publication number:
**WO 2009/148049 (10.12.2009 Gazette 2009/50)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **02.06.2008  JP 2008144132**

(71) Applicant: **Yamaha Corporation**
**Hamamatsu-shi, Shizuoka 430-8650 (JP)**

(72) Inventors:
• **ISHIBASHI, Toshiaki**
  **Shizuoka (JP)**
• **TANAKA, Ryo**
  **Shizuoka (JP)**

(74) Representative: **Wagner, Karl H.**
**Wagner & Geyer Partnerschaft**
**Patent- und Rechtsanwälte**
**Gewürzmühlstrasse 5**
**80538 München (DE)**

(54) **ACOUSTIC ECHO CANCELLER AND ACOUSTIC ECHO CANCEL METHOD**

(57)    An adaptive filter generates a pseudo echo sound signal based on a sound emission sound signal. An adder subtracts the pseudo echo sound signal from a low band component of a collected sound signal, thereby generating a sound signal with a first-adjusted low band component. An echo spectrum estimation section estimates and calculates a frequency spectrum of a re- verberation echo this time from a spectrum of the pseudo echo sound signal this time, a frequency spectrum of the preceding reverberation echo, and an update coefficient based on an audio environment. An adder subtracts the frequency spectrum of the reverberation echo and the frequency spectrum of stationary noise from a spectrum of the sound signal with the first-adjusted low band component.

FIG.1

EP 2 293 595 A1

**Description**

Technical Field

This invention relates to an acoustic echo canceller and an acoustic echo cancellation method for removing a reverberation echo based on an installation environment, etc., and an acoustic echo containing stationary noise from an collected sound signal.

Background Art

Hitherto, an acoustic echo easily occurs because a speaker unit and a microphone are near to each other, etc., in an audio conference apparatus having the speaker unit and the microphone installed in one housing. Thus, various echo cancellation devices for removing such an acoustic echo are devised. For example, Patent Literature 1 discloses an echo cancellation device including an echo canceller having an adaptive filter and an echo suppression section for suppressing an echo by computation on a frequency domain.

Citation List

Patent Literature

Patent Literature 1: Japanese Patent No. 3420705

Summary of Invention

Technical Problem

However, it is difficult for the echo cancellation device in Patent Literature 1 to effectively remove a reverberation echo and stationary noise with which the echo canceller cannot essentially deal because echo suppression processing is performed with the echo canceller using the adaptive filter and according to the frequency domain based on a frequency spectrum of a pseudo echo signal at each timing estimated by the echo canceller. Further, the basic characteristic of the reverberation echo changes depending on the installation situation of the conference apparatus in which the echo cancellation device is installed or the like. Thus, unless an appropriate algorithm (operational expression, etc.,) responsive to the situation is used, an echo cannot effectively be removed and in addition, an extra echo is generated.
It is therefore an object of the invention to realize an acoustic echo canceller and an acoustic echo cancellation method capable of effectively removing an echo and noise that cannot completely be removed with only an echo canceller using an adaptive filter and further appropriately removing a reverberation echo depending on the installation environment.

Solution to Problem

The invention relates to an acoustic echo canceller and echo cancellation method for removing any other sound than an object sound contained in an collected sound signal. The echo canceller according to the invention includes an adaptive filter, a first difference section, a disturbance spectrum estimation section, and a second difference section. The adaptive filter generates a pseudo echo sound signal based on a sound emission sound signal. The first difference section subtracts the pseudo echo sound signal from the collected sound signal to generate a first adjustment sound signal. The disturbance spectrum estimation section estimates a disturbance spectrum contained in the first adjustment sound signal with reference to a spectrum of the pseudo echo sound signal and an audio environment parameter based on an installation environment. The second difference section subtracts the disturbance spectrum from a frequency spectrum of the first adjustment sound signal and outputs the result of the subtraction.
In this configuration, the pseudo echo sound signal is generated through the adaptive filter and the frequency spectrum of a disturbance echo with which the adaptive filter cannot completely deal is estimated. The acoustic echo canceller of the invention first subtracts the pseudo acoustic sound signal from the collected sound signal by a sound collection section, thereby performing echo cancellation at the first stage with respect to a linear component of the signal. Further, the acoustic echo canceller subtracts the frequency spectrum of the disturbance echo from the frequency spectrum of the signal after subjected to the echo cancellation at the first stage, thereby performing echo removal at the second stage. At this time, the frequency spectrum of the disturbance echo is estimated using the spectrum of the pseudo echo sound signal and the audio environment parameter based on the installation environment. In this way, using the pseudo echo signal sound and the audio environment parameter in combination, the reverberation echo component which changes in response to the audio environment and cannot completely be removed with the pseudo echo sound signal can be estimated appropriately

The acoustic echo canceller of the invention further includes an audio environment parameter setting section. This audio environment parameter setting section sets the audio environment parameter based on a filter coefficient of the adaptive filter.

In this configuration, the coefficient in the time domain of the adaptive filter corresponds to impulse response between a speaker unit and a microphone. Thus, the envelope characteristic is detected, whereby the length and the level of an echo sound is obtained and the audio environment parameter is obtained. That is, the audio environment parameter depending on the installation position is automatically set without manual input by an operator.

The acoustic echo canceller of the invention further includes a state determination section. The state determination section determines a state of emitted and collected sounds based on the sound emission sound signal and the first adjustment sound signal and gives the state determination result to the audio environment parameter setting section. When the audio environment parameter setting section acquires determination of a silent state as the state determination section, the audio environment parameter setting section performs setting processing of the audio environment parameter.

In this configuration, the state determination section discriminates a silent state, a state of only sound emission, a state of only sound collection, and a state of presence of sound emission and sound acquisition (W talk state). In the silent state, setting of the audio environment parameter based on the impulse response described above is made. Accordingly, the reverberation based on impulse response can be collected precisely.

The acoustic echo canceller of the invention includes a band division section and an attenuator. The band division section divides the collected sound signal into a low band component and a high band component and outputs the low band component of the collected sound signal to the first difference section. The attenuator attenuates the high band component of the collected sound signal output from the band division section in response to the result of the state determination.

In this configuration, the collected sound signal is divided into the low band component and the high band component, and the processing described above is performed only with the low band component, so that computation load on echo cancellation processing and echo removal processing is decreased and speeding up is also made possible. At the time, the level of the high band component of a sound signal produced by a human being is small as compared with the level of the low band component. Further, the level of the high band component essentially echoed and fed back to a microphone is small as compared with the level of the low band component. Therefore, if attenuation processing is only performed for the high band component simply by the attenuator, the effect on the sound quality is small. That is, effective echo cancellation and echo removal as described above is performed further efficiently while predetermined sound quality is kept.

The disturbance spectrum estimation section of the acoustic echo canceller of the invention includes an echo spectrum estimation section and a noise spectrum estimation section. The echo spectrum estimation section estimates a reverberation echo spectrum based on a frequency spectrum of the pseudo echo sound signal and the sound environment parameter. The noise spectrum estimation section estimates stationary noise spectrum based on the frequency spectrum of the first adjustment sound signal.

In this configuration, the disturbance spectrum is divided into an echo spectrum depending on an echo sound (reverberation sound) and a noise spectrum depending on stationary noise of background noise other than the echo sound for estimation. Accordingly, the disturbance spectrum is more appropriately estimated in response to the factor, so that echo removal is executed more effectively.

An acoustic echo cancellation method for removing any other sound than an object sound contained in an collected sound signal according to an embodiment of the invention includes the steps of:

generating a pseudo echo sound signal based on a sound emission sound signal;
subtracting the pseudo echo sound signal from the collected sound signal to generate a first adjustment sound signal;
estimating a disturbance spectrum contained in the first adjustment sound signal with reference to a spectrum of the pseudo echo sound signal and an audio environment parameter based on an installation environment; and
subtracting the disturbance spectrum from a frequency spectrum of the first adjustment sound signal and outputting the result of the subtraction.

Advantageous Effects of Invention

According to the invention, the disturbance echo containing a reverberation echo that cannot be completely removed with only an echo canceller using an adaptive filter can be precisely estimated and the disturbance echo can be removed with high accuracy. Accordingly, first adjustment using the adaptive filter and second adjustment based on disturbance echo removal are performed and the sound of a talker on the own device side can be output more clearly.

Brief Description of Drawings

FIG. 1 is a block diagram to show the main configuration of an acoustic echo canceller according to a first embodiment.
FIG. 2 shows a determination concept of state determination and learning processing of the acoustic echo canceller shown in FIG. 1.
FIG. 3 shows a setting concept of an update coefficient $\beta$.
FIG. 4 shows the envelope characteristic of an impulse response signal from a speaker unit to a microphone.
FIG. 5 shows the attenuation amount of an echo suppressor 40.
FIG. 6 is a block diagram to show the main configuration of an acoustic echo canceller according to another configuration.

Description of Embodiments

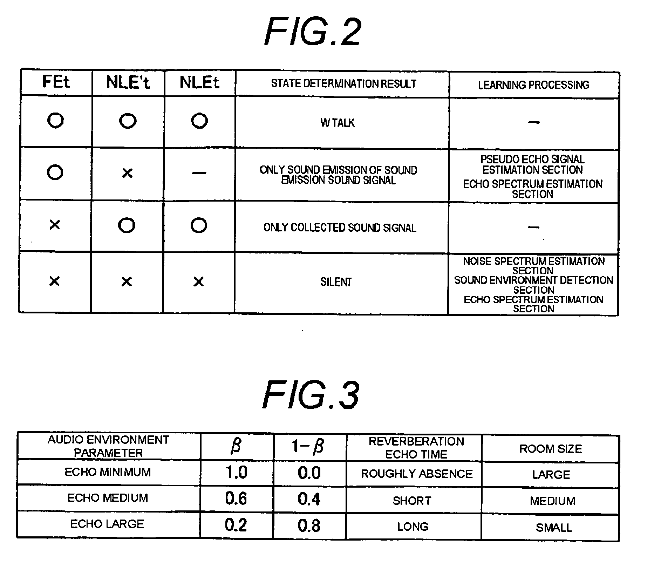

An acoustic echo canceller according to a first embodiment of the invention will be described with reference to the accompanying drawings. In the description to follow, a signal in a time domain has a suffix 't' and a signal in a frequency domain has a suffix 'n'.

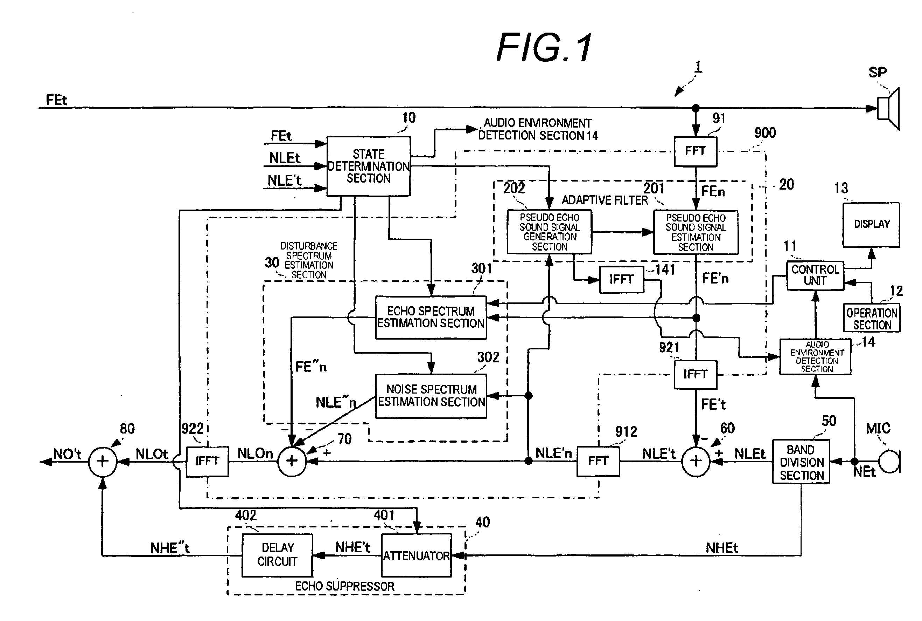

FIG. 1 is a block diagram to show the schematic configuration of main components of the acoustic echo canceller of the embodiment.
As shown in FIG. 1, an echo canceller 1 includes a speaker unit SP, a microphone MIC, a state determination section 10, a control unit 11, an operation section 12, a display 13, an audio environment detection section 14, an adaptive filter 20, a disturbance spectrum estimation section 30, an echo suppressor 40, a band division section 50, an adder 60 corresponding to a first differential section of the invention, an adder 70 corresponding to a second differential section of the invention, and an adder 80.
The state determination section 10 detects any of "presence state of both sound emission and sound acquisition (W talk state)," "presence state of only sound emission of sound emission sound signal," "presence state of collected sound signal with no sound emission," or "absence state of both sound emission and sound acquisition (silent state)" based on the signal levels of a sound emission sound signal FEt, a low band component of a collected sound signal NLEt, and a sound signal with a first-adjusted low band component NLE't, and gives the detection state to the adaptive filter 20, the disturbance spectrum estimation section 30, the echo suppressor 40, and the audio environment detection section 14. FIG. 2 shows a determination concept of state determination of the state determination section 10 shown in FIG. 1 and learning processing.
Specifically, if the state determination section 10 detects all of the sound emission sound signal FEt, the low band component of the collected sound signal NLEt, and the sound signal with the first-adjusted low band component NLE't are at a level equal to or more than a preset threshold value, the state determination section 10 determines that both sound emission and talker speech are performed and determines the "W talk state." If the sound emission sound signal FEt is at a level equal to or more than the threshold value and the sound signal with the first-adjusted low band component NLE't is less than the threshold value, the state determination section 10 determines the state of "presence of only sound emission of sound emission sound signal." If the low band component of the collected sound signal NLEt and the sound signal with the first-adjusted low band component NLE't are at a level equal to or more than the threshold value and the sound emission sound signal FEt is less than the threshold value, the state determination section 10 determines the state of "presence of collected sound signal with no sound emission." Further, if the state determination section 10 detects all of the sound emission sound signal FEt, the low band component of the collected sound signal NLEt, and the sound signal with the first-adjusted low band component NLE't are less than the threshold value, the state determination section 10 determines the "silent" state.
The control unit 11 performs overall control containing power supply control, operation input control, display control, etc., of the acoustic echo canceller. Upon acceptance of an audio environment parameter setting command from the operation section 12 or the audio environment detection section 14, the control unit 11 gives an update coefficient $\beta$ corresponding to the specified audio environment parameter to an echo spectrum estimation section 301 of the disturbance spectrum estimation section 30. FIG. 3 shows an example of a concept of setup parameter of the update coefficient $\beta$. For example, as shown in FIG. 3, when the control unit 11 obtains information of "echo minimum" as the audio environment parameter, the control unit 11 gives $\beta = 1$ to the echo spectrum estimation section 301. When the control unit 11 obtains information of "echo medium" as the audio environment parameter, the control unit 11 gives $\beta = 0.6$ to the echo spectrum estimation section 301. Further, when the control unit 11 obtains information of "echo large" as the audio environment parameter, the control unit 11 gives $\beta = 0.2$ to the echo spectrum estimation section 301. The setup values shown here are an example and may be set where appropriate depending on the device specification and the environment. The update coefficient β may be set in further multiple steps.

The operation section 12 is a user interface with the user containing a talker and has various operation elements (not shown). Upon acceptance of operation input of audio environment setting from the user, the operation section 12 outputs an audio environment parameter setting command corresponding to the input audio environment to the control unit 11.

The display 13 includes a display element of a liquid crystal display, etc., and displays an operation menu, etc., in accordance with display control from the control unit 11.

The user sets the audio environment parameter by manual input using the operation section 12 and the display 13. That is, when a setting change command of the audio environment parameter is received from the operation section 12 by the user, a screen for setting the audio environment parameter, for example, "room size" and "large," "medium," and "small" indicating the size shown in FIG. 3 are displayed on the display 13. The user inputs the size of the room in which the device having the echo canceller 1 is installed, etc., in accordance with the display screen. The operation section 12 gives an audio environment parameter setting command based on the operation input result (for example, "echo minimum," "echo medium," and "echo large") to the control unit 11. The control unit 11 gives the update coefficient β responsive to the audio environment parameter to the echo spectrum estimation section 301 as described above.

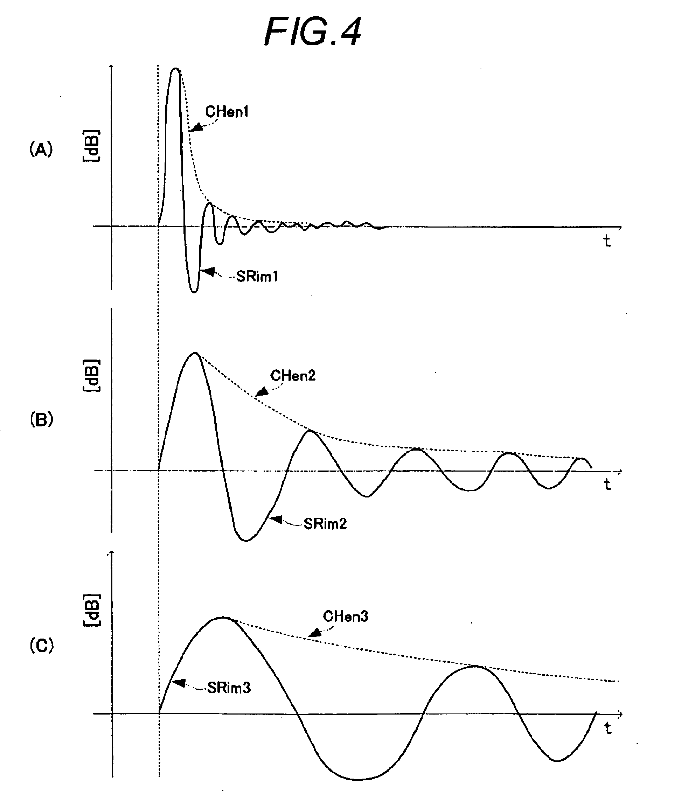

When the audio environment detection section 14 acquires the silent state determination result from the state determination section 10, the audio environment detection section 14 acquires an impulse response signal (SRim in FIG. 4) provided by executing inverse Fourier transform of impulse response responsive to each tap coefficient of a pseudo echo sound signal estimation section 202 in an IFFT 141 and detects envelope characteristic (CHen in FIG. 4). FIG. 4 shows the envelope characteristic of the impulse response signal; (A) shows the envelope characteristic when the echo is minimum (CHen1) ; (B) shows the envelope characteristic when the echo is medium (CHen2); and (C) shows the envelope characteristic when the echo is large (CHen3).

The audio environment detection section 14 detects the amplitude and the attenuation characteristic of the envelope waveform Chen, thereby acquiring the reverberation echo time, and gives an audio environment parameter setting command to the control unit 11 based on the reverberation echo time. For example, if the characteristic is the characteristic indicated by (A) in FIG. 4 and the echo time is "roughly absence" as shown in FIG. 3, the audio environment parameter "echo minimum" is given to the control unit 11. If the characteristic is the characteristic indicated by (B) in FIG. 4 and the echo time is "short" as shown in FIG. 3, the audio environment parameter "echo medium" is given to the control unit 11. If the characteristic is the characteristic indicated by (C) in FIG. 4 and the echo time is "long" as shown in FIG. 3, the audio environment parameter "echo large" is given to the control unit 11. Such processing is performed, whereby automatic setting can be made without manual input of the audio environment parameter. Further, the processing is performed each time a silent state is detected, whereby an audio environment change, for example, caused by a change in the number of users or a change in the position of the user can also be added for dynamically changing the audio environment parameter.

A speaker unit SP emits a sound based on the sound emission sound signal FEt input from the outside. The sound emission sound signal (far end signal) FEt is also input to FFT 911.

The FFT 911, which is a fast Fourier transform circuit, converts the sound emission sound signal FEt of a function of a time domain into a sound emission sound signal FEn of a function of a frequency domain and gives the signal to the adaptive filter 20.

The adaptive filter 20 includes a pseudo echo sound signal generation section 201 and the pseudo echo sound signal estimation section 202. The pseudo echo sound signal generation section 201 is, for example, a FIR filter made up of a predetermined number of taps and is set according to a coefficient given from the pseudo echo sound signal estimation section 202. The pseudo echo sound signal generation section 201 generates a pseudo echo sound signal FE'n based on the sound emission sound signal FEn. The generated pseudo echo sound signal FE'n is input to IFFT 921 and the echo spectrum estimation section 301 of the disturbance spectrum estimation section 30.

The pseudo echo sound signal estimation section 202 estimates the pseudo echo sound signal FE'n from a frequency spectrum (NLE'n) of the sound signal with the first-adjusted low band component NLE't described later using an adaptive algorithm of LMS, etc. The pseudo echo sound signal estimation section 202 estimates coefficients (coefficient of each tap, namely, filter coefficients) for causing the pseudo echo sound signal generation section 201 to generate the pseudo echo sound signal FE'n and gives the coefficients to the pseudo echo sound signal generation section 201. At this time, the pseudo echo sound signal estimation section 202 learns by the above-mentioned estimation only when information of the state of "presence of only sound emission of sound emission sound signal" is acquired from the state determination section 10. Such estimation, generation of the pseudo echo sound signal FE'n, and learning are repeated during the operation of the acoustic canceller 1.

The IFFT 921, which is an inverse fast Fourier transform circuit, converts the pseudo echo sound signal FE'n of a function of a frequency domain into a pseudo echo sound signal FE't of a function of a time domain and outputs the converted signal to the adder 60.

A microphone MIC collects a sound from the surrounding of a place where the acoustic canceller 1 is installed and generates an collected sound signal (near end signal) NEt. If a sound is emitted from the speaker unit SP, the collected sound signal NEt contains the component of an echo sound as the emitted sound is echoed based on the installation environment. If a talker in the surrounding of the microphone MIC speaks, the collected sound signal NEt contains the component of speaker sound. Further, if stationary noise peculiar to the environment exists because of the installation environment of a conference room, etc., the collected sound signal NEt also contains the component of the stationary noise.

The band division section 50 is installed between the microphone MIC and the adder 60. The band division section 50 divides the collected sound signal NEt into a low band component NLEt and a high band component NHEt. The threshold frequency for distinguishing between the low band and the high band is, for example, set to 8 kHz and the low band component NLEt equal to or less than 8 kHz of the main component of a human voice is given to the adder 60. The high band component NHEt higher than 8 kHz is given to the echo suppressor 40. Reverberation echo and stationary noise each whose main component is a low frequency band and therefore are almost contained in the low band component NLEt.

The adder 60 subtracts the pseudo echo sound signal FE't from the low band component of the collected sound signal NLEt, thereby generating and outputting the sound signal with the first-adjusted low band component NLE't. Accordingly, adaptive echo cancellation processing using the pseudo echo sound signal is executed as adjustment at the first stage.

An FFT 912, which is a fast Fourier transform circuit, converts the sound signal with the first-adjusted low band component NLE't of a function of a time domain into the sound signal with the first-adjusted low band component NLE'n of a function of a frequency domain and outputs the converted signal. A frequency spectrum S (NLE'n) of the sound signal with the first-adjusted low band component NLE'n is input to the pseudo echo sound signal estimation section 202 described above and a noise spectrum estimation section 302 of the disturbance spectrum estimation section 30.

The disturbance spectrum estimation section 30 includes the echo spectrum estimation section 301 and the noise spectrum estimation section 302. Simply, the echo spectrum estimation section 301 is a computation section for estimating an echo component that cannot completely be removed by the pseudo echo sound signal FE'n only, and the noise spectrum estimation section 302 is a computation section for estimating stationary noise.

The echo spectrum estimation section 301 sequentially acquires a frequency spectrum S (FE'n) of a pseudo echo sound signal FE'n every sampling timing and temporarily stores the spectrum. The echo spectrum estimation section 301 estimates a reverberation echo spectrum S this time (FE"n) based on the collected and stored frequency spectrum S (FE'n) of the pseudo echo sound signal FE'n, the reverberation echo spectrum S estimated previous time (FE"n), and the update coefficient β given from the control unit 11, and stores the estimated reverberation echo spectrum S (FE"n).

For example, assume that the reverberation echo spectrum at one sampling timing N be S (FE"n(N)), the frequency spectrum of a pseudo echo sound signal at the same timing N be S (FE'n(N)), and the reverberation echo spectrum at the immediately preceding sampling timing N-1 be S (FE"n(N-1)). Assume that β is an update coefficient.

In this setting, the reverberation echo spectrum S (FE"n(N)) is represented by the following expression and is calculated:

$$S\ (FE''n(N)) = (1\text{-}\beta)\ S\ (FE''n(N\text{-}1)) + \beta S\ (FE'n(N))$$

$$\cdots \text{operational expression (1)}$$

Thus, the reverberation echo spectrum S (FE"n) is estimated based on the frequency spectrum S (FE'n) of the pseudo echo sound signal FE'n, whereby the frequency spectrum of the reverberation echo that cannot be completely removed through the adaptive filter 20 can be acquired. That is, the adaptive filter 20 is made up of a FIR filter, etc., and the pseudo echo sound signal FE'n that can be represented by specification of the number of taps, etc., is limited. Accordingly, in the case of restoration on a time axis, a difference occurs between the pseudo echo sound signal FE't and the actual acoustic feedback sound. However, the reverberation echo is estimated from the pseudo echo sound signal FE'n in the frequency domain, whereby the limitation on the time axis can be removed and the reverberation echo that cannot completely be removed using the pseudo echo sound signal FE't can be estimated.

Further, using the update coefficient β, the estimation algorithm (operational expression (1) described above) can be adjusted more appropriately in response to the installation environment of the device including the acoustic echo canceller 1. Specifically, the update coefficient β is set where appropriate, whereby the level ratio at the adding time of the frequency spectrum S (FE'n(N)) of the pseudo reverberation sound signal at the sampling timing N this time and the frequency spectrum S (FE"n(N-1)) of the reverberation echo at the preceding sampling timing N-1 is adjusted. The update coefficient β is set so that the value becomes larger as the echo is smaller and that the value becomes smaller as the echo is larger. Accordingly, if the echo is small, the update coefficient β becomes large and the frequency spectrum S (FE'n(N)) of the pseudo echo sound signal at the sampling timing N this time largely affects estimation of the reverberation echo spectrum S (FE"n(N)) from operational expression (1). On the other hand, if the echo is large, the update coefficient β becomes small and the frequency spectrum S (FE"n(N-1)) of the reverberation echo at the preceding sampling timing N-1 largely affects the reverberation echo spectrum S (FE"n(N)) at the sampling timing N this time. This means that if the echo is small, reverberation echo scarcely remains and thus the portion of the minimum time can be estimated only with the frequency spectrum S (FE'n(N)) of the pseudo echo sound signal at the sampling timing N this time. On the other hand, if the echo is large, reverberation echo exists for a long time and thus the past portion can be estimated with the frequency spectrum S (FE"n(N-1)) of the reverberation echo at the preceding sampling timing N-1. The update coefficient β is thus used, whereby the reverberation echo spectrum S (FE"n(N)) can be estimated with good accuracy in response to the audio environment.

The noise spectrum estimation section 302 sequentially acquires and temporarily stores the frequency spectrum S (NLE'n) of the sound signal with the first-adjusted low band component NLE'n. The noise spectrum estimation section 302 estimates the noise spectrum S (NLE"n(N)) based on the frequency spectrum S (NLE'n) of the sound signal with the first-adjusted low band component NLE'n acquired and stored more than once.

For example, assume that the noise spectrum at one sampling timing N be S (NLE"n(N)), the frequency spectrum of the sound signal with the first-adjusted low band component at the same sampling timing N be S (NLE'n(N)), and the frequency spectrum of the sound signal with the first-adjusted low band component at the immediately preceding sampling timing N-1 be S (NLE'n(N-1)). Assume that $\alpha$ and $\gamma$ be constants.

In this setting, the noise spectrum S (NLE"n(N)) is represented by the following expression and is calculated:

S (NLE"n(N)) = $\alpha$S (NLE'n(N-1)) + $\gamma$S (NLE'n(N)).

Thus, the noise spectrum S (NLE"n) is estimated based on the frequency spectrum of the sound signal with the first-adjusted low band component NLE'n of a signal after echo cancellation, whereby stationary noise of background noise, etc., aside from echo can be estimated. At this time, the noise spectrum estimation section 302 learns by the estimation described above only if information of "silent" state is acquired from the state determination section 10. Such estimation and learning are also repeated during the operation of the acoustic echo canceller 1.

The adder 70 is an adder for performing computation in the frequency domain and subtracts the reverberation echo spectrum S (FE"n) and the noise spectrum S (NLE"n) from the frequency spectrum S (NLE'n) of the sound signal with the first-adjusted low band component NLE'n, thereby generating and outputting a sound signal with a second-adjusted low band component S (NLOn). The processing is performed so that spectra are synchronized with each other. That is, synchronization mentioned here is computation performed using spectra formed at the same sampling timing. For example, in the case of the sampling timing N, it means that computation processing of S (NLOn(N)) = S (NLE'n(N)) - S (FE"n(N)) - S (NLE"n(N)) is performed. Accordingly, reverberation echo and stationary noise are removed in a different system from the adaptive echo cancellation as adjustment at the second stage.

An IFFT 922, which is an inverse fast Fourier transform circuit, converts the sound signal with the second-adjusted low band component NLOn of a function of a frequency domain into the sound signal with the second-adjusted low band component NLOt of a function of a time domain and outputs the converted signal to the adder 80.

The echo suppressor 40 includes an attenuator 401 and a delay circuit 402. The attenuator 401 adjusts the attenuation amount of the high band component NHEt of the collected sound signal NEt based on the state determination result from the state determination section 10 and outputs a high band component already subjected to the attenuation processing, NHE't.

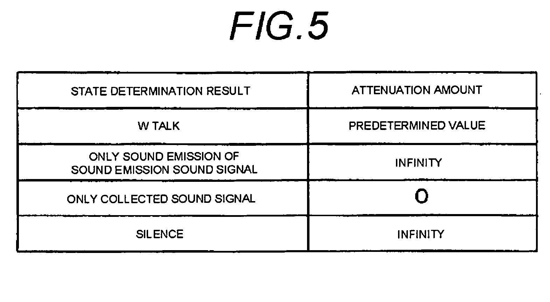

FIG. 5 shows the attenuation amount of the attenuator 401 of the echo suppressor 40.

When the attenuator 401 acquires the determination result of the state of "presence of only sound emission of sound emission sound signal" or the "silent" state, the attenuator 401 sets the attenuation amount to infinity, namely, shuts off the high band component NHEt (NHE't = 0). When only the sound emission sound signal exists or in the silent state, a talker sound is not contained and thus the high band component can be shut off and echo and stationary noise existing as the high band component can be removed more reliably.

When the attenuator 401 acquires information of the state of "presence of collected sound signal with no sound emission," the attenuator 401 sets the attenuation amount to "0," namely, allows the high band component NHEt to pass through without attenuating it (NHE't = NHEt). When only the collected sound signal thus exists, the high band component is dominated by talker sound and thus is not attenuated, whereby the talker sound can be output more precisely.

Further, when the attenuator 401 acquires information of the "W talk" state, the attenuator 401 sets the attenuation amount to a predetermined value. At the W talk time, the component of the sound emission sound signal FEt to be removed and the talker sound component mix and thus the attenuation amount is set to a measure of attenuation amount. Accordingly, although the talker sound is slightly sacrificed, the echo component caused by the sound emission sound signal FEt can be attenuated.

The high band component already subjected to the attenuation processing, NHE't, output from the attenuator 401 is input to the delay circuit 402. The delay circuit 402 performs delay processing for time synchronizing and adding the high band component NHEt (NHE't) whose processing computation is easy at high speed and the sound signal with the second-adjusted low band component NLOt subjected to the echo cancellation and the echo removal processing described above. As the delay processing is performed, a high band component already subjected to delay attenuation processing, NHE"t, is generated and is given to the adder 80.

The adder 80 adds the sound signal with the second-adjusted low band component NLOt and the high band component already subjected to delay attenuation processing, NHE"t, time-synchronized with the signal NLOt to generate an output sound signal NO't and outputs the signal to the outside.

The configuration is adopted and the processing is performed, so that reverberation echo and stationary noise that cannot be completely removed by performing the echo cancellation processing with only the adaptive filter can be removed with good accuracy and effectively. At this time, the audio environment of reverberation echo, etc., in the installation environment of a room, etc., is detected and a reverberation echo spectrum is obtained using the estimation algorithm responsive to the audio environment, so that the reverberation echo can be removed with higher accuracy.

Further, only the low band component is subjected to echo cancellation and echo removal processing and the high band component is subjected to attenuation processing, whereby the processing computation amount can be decreased. At this time, if the echo cancellation and the echo removal processing described above are not performed for the high band component, the main component of a sound of a human being exists in the low band component and the high band component involves a small reverberatively fed back amount as compared with the low band component, so that degradation of the sound quality can be suppressed. Further, the attenuation amount is changed for each sound emission and acquisition state as described above, whereby echo can be removed more reliably and degradation of sound quality of a talker sound can be suppressed.

In the description given above, the adaptive filter is realized by frequency domain computation by way of example, but an adaptive filter based on the time domain may be used.

In the description given above, state determination is made based only on the signal level in the state determination section 10 by way of example, but may be made based on correlation of signals.

In the description given above, the acoustic echo canceller includes the speaker unit and the microphone by way of example, but may include an output terminal to a sound emission element of a speaker unit, etc., and an input terminal from a sound collection element of a microphone, etc., and the sound emission element and the sound collection element may be separate bodies.

In the description given above, the state determination result is given to each section from the state determination section 10 by way of example, but the state determination section 10 may store a condition of the learning timing of each section and the learning timing may be given to each section from the state determination section 10.

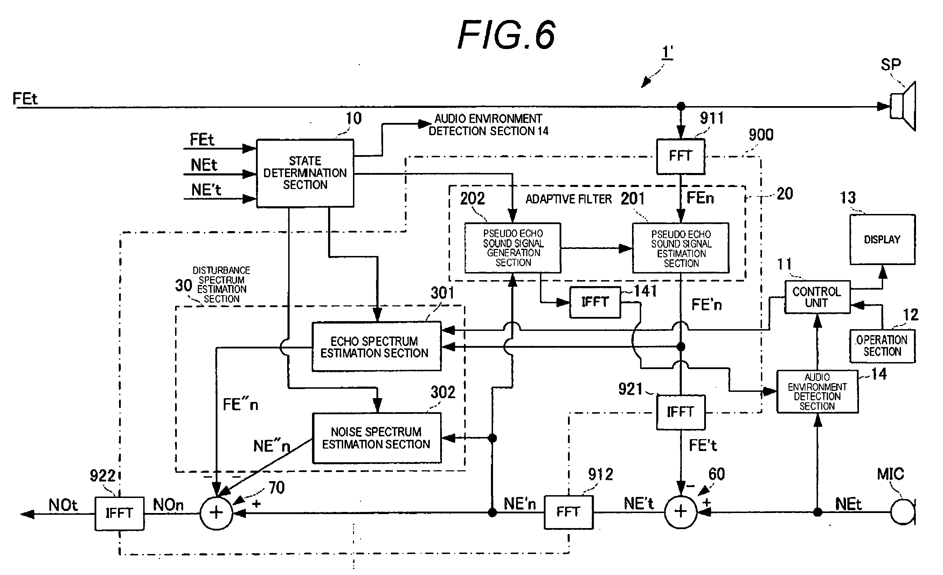

In the description given above, the collected sound signal is divided into the low band component and the high band component by way of example. Alternatively, as shown in FIG. 6, when echo cancellation processing and echo removal processing are performed without separating the signal, the function and the effect described above can be obtained.

In the description given above, the disturbance spectrum estimation section includes the echo spectrum estimation section and the noise spectrum estimation section by way of example, but alternatively, when the echo spectrum estimation section only is included, reverberation echo can be removed with high accuracy.

Reference Signs List

1 - Acoustic echo canceller, 10 - State determination section, 11 - Control unit, 12 - Operation section, 13 - Display, 14 - Audio environment detection section, 20 - Adaptive filter, 201 - Pseudo echo sound signal generation section, 202 - Pseudo echo sound signal estimation section, 30 - Disturbance spectrum estimation section, 301 - Echo spectrum estimation section, 302 - Noise spectrum estimation section, 40 - Echo suppressor, 401 - Attenuator, 402 - Delay circuit, 50 - Band division section, 60, 70, 80 - Adder, 900 - Frequency domain computation section, 911, 912 - FFT computation section, 921, 922, 141 - IFFT computation section SP - Speaker unit, MIC - Microphone

**Claims**

1. An acoustic echo canceller for removing any other sound than an object sound contained in an collected sound signal, the acoustic echo canceller comprising:

an adaptive filter which is adapted to generate a pseudo echo sound signal based on a sound emission sound signal;

a first difference section which is adapted to subtract the pseudo echo sound signal from the collected sound signal to generate a first adjustment sound signal;
a disturbance spectrum estimation section which is adapted to estimate a disturbance spectrum contained in the first adjustment sound signal with reference to a spectrum of the pseudo echo sound signal and an audio environment parameter based on an installation environment; and
a second difference section which is adapted to subtract the disturbance spectrum from a frequency spectrum of the first adjustment sound signal and output the result of the subtraction.

2. The acoustic echo canceller as claimed in claim 1, comprising an audio environment parameter setting section for setting the audio environment parameter based on a filter coefficient of the adaptive filter.

3. The acoustic echo canceller as claimed in claim 2, comprising a state determination section which is adapted to determine a state of emitted and collected sounds based on the sound emission sound signal and the first adjustment sound signal, and give a state determination result to the audio environment parameter setting section, wherein when the audio environment parameter setting section acquires determination of a silent state from the state determination section, the audio environment parameter setting section performs setting processing of the audio environment parameter.

4. The acoustic echo canceller as claimed in claim 3, comprising:

   a band division section which is adapted to divide the collected sound signal into a low band component and a high band component, and output the low band component of the collected sound signal to the first difference section; and
   an attenuator which is adapted to attenuate the high band component of the collected sound signal output from the band division section in response to the result of the state determination.

5. The acoustic echo canceller as claimed in claims 1 to 4, wherein the disturbance spectrum estimation section comprises:

   an echo spectrum estimation section which is adapted to estimate a reverberation echo spectrum based on a frequency spectrum of the pseudo echo sound signal and the sound environment parameter; and
   a noise spectrum estimation section which is adapted to estimate stationary noise based on the frequency spectrum of the first adjustment sound signal.

6. An acoustic echo cancellation method for removing any other sound than an object sound contained in an collected sound signal, the acoustic echo cancellation method comprising the steps of:

   generating a pseudo echo sound signal based on a sound emission sound signal;
   subtracting the pseudo echo sound signal from the collected sound signal to generate a first adjustment sound signal;
   estimating a disturbance spectrum contained in the first adjustment sound signal with reference to a spectrum of the pseudo echo sound signal and an audio environment parameter based on an installation environment; and
   subtracting the disturbance spectrum from a frequency spectrum of the first adjustment sound signal and outputting the result of the subtraction.

# FIG.1

# FIG.2

| FEt | NLE't | NLEt | STATE DETERMINATION RESULT | LEARNING PROCESSING |
|---|---|---|---|---|
| O | O | O | W TALK | — |
| O | × | — | ONLY SOUND EMISSION OF SOUND EMISSION SOUND SIGNAL | PSEUDO ECHO SIGNAL ESTIMATION SECTION ECHO SPECTRUM ESTIMATION SECTION |
| × | O | O | ONLY COLLECTED SOUND SIGNAL | — |
| × | × | × | SILENT | NOISE SPECTRUM ESTIMATION SECTION SOUND ENVIRONMENT DETECTION SECTION ECHO SPECTRUM ESTIMATION SECTION |

# FIG.3

| AUDIO ENVIRONMENT PARAMETER | $\beta$ | $1-\beta$ | REVERBERATION ECHO TIME | ROOM SIZE |
|---|---|---|---|---|
| ECHO MINIMUM | 1.0 | 0.0 | ROUGHLY ABSENCE | LARGE |
| ECHO MEDIUM | 0.6 | 0.4 | SHORT | MEDIUM |
| ECHO LARGE | 0.2 | 0.8 | LONG | SMALL |

# FIG.4

# FIG.5

| STATE DETERMINATION RESULT | ATTENUATION AMOUNT |
|---|---|
| W TALK | PREDETERMINED VALUE |
| ONLY SOUND EMISSION OF SOUND EMISSION SOUND SIGNAL | INFINITY |
| ONLY COLLECTED SOUND SIGNAL | O |
| SILENCE | INFINITY |

# FIG.6

EP 2 293 595 A1

## INTERNATIONAL SEARCH REPORT

| International application No. |
|---|
| PCT/JP2009/060055 |

A. CLASSIFICATION OF SUBJECT MATTER
*H04R3/02*(2006.01)i, *H04B3/23*(2006.01)i

According to International Patent Classification (IPC) or to both national classification and IPC

B. FIELDS SEARCHED

Minimum documentation searched (classification system followed by classification symbols)
H04R3/02, H04B3/23

Documentation searched other than minimum documentation to the extent that such documents are included in the fields searched
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2008-516545 A (Koninklijke Philips Electronics N.V.), 15 May, 2008 (15.05.08), Par. Nos. [0044] to [0046]; Fig. 4 & US 2008/0085009 A1 & EP 001803288 A & WO 2006/040734 A1 & KR 10-2007-0062605 A & CN 101040512 A | 1,6<br>2-5 |
| A | WO 99/17526 A1 (Siemens AG.), 08 April, 1999 (08.04.99), Page 9, line 22 to page 10, line 31; Figs. 2 to 3 & EP 001020068 B & DE 019743192 A & ES 002190815 T | 1-6 |

☒ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 August, 2009 (06.08.09) | 18 August, 2009 (18.08.09) |

| Name and mailing address of the ISA/<br>Japanese Patent Office | Authorized officer |
|---|---|
| Facsimile No. | Telephone No. |

Form PCT/ISA/210 (second sheet) (April 2007)

**INTERNATIONAL SEARCH REPORT**

| International application No. |
| --- |
| PCT/JP2009/060055 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2004-537219 A  (Koninklijke Philips Electronics N.V.), 09 December, 2004 (09.12.04), Par. Nos. [0005] to [0037]; Figs. 1 to 5 & US 2003/0031315 A1    & EP 001413127 A & WO 2003/010950 A1    & CN 001533665 A | 1-6 |

Form PCT/ISA/210 (continuation of second sheet) (April 2007)

**EP 2 293 595 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3420705 B